# EUROPEAN PATENT SPECIFICATION

(11) **EP 4 557 275 B1**
(45) Date of publication and mention of the grant of the patent: **28.01.2026**
(21) Application number: 23838991.0
(22) Date of filing: 12.07.2023
(51) Int. Cl.: G10L 15/04, G10L 25/87, G10L 25/78

(54) **SPEECH PROCESSING**
SPRACHVERARBEITUNG
TRAITEMENT DE LA PAROLE

(30) Priority: 14.07.2022 CN 202210824381
(43) Date of publication of application: 21.05.2025
(73) Proprietor: IFLYTEK CO., LTD., Hefei, Anhui 230088 (CN)
(72) Inventor: XIAO, Jianhui, Hefei, Anhui 230088 (CN); XING, Meng, Hefei, Anhui 230088 (CN); GAO, Wanjun, Hefei, Anhui 230088 (CN); CHEN, Zhigang, Hefei, Anhui 230088 (CN); WANG, Fei, Hefei, Anhui 230088 (CN); HU, Yin, Hefei, Anhui 230088 (CN)
(74) Representative: Herrero & Asociados, S.L.
(86) International application number: PCT/CN2023/107073
(87) International publication number: WO 2024/012501

(56) References cited:
- WO-A2-2018/208497
- CN-A- 110 612 567
- CN-A- 112 002 349
- CN-A- 113 241 071
- CN-A- 113 393 840
- CN-A- 114 385 800
- CN-A- 114 708 856
- CN-A- 114 898 755
- US-A- 4 979 212
- US-A1- 2018 090 127
- US-A1- 2020 335 128
- US-B1- 10 134 425
- US-B1- 9 437 186

## Description

### TECHNICAL FIELD

The present disclosure relates to the technical field of speech processing, and in particular to a speech processing method, an electronic device, and a computer-readable storage medium.

### BACKGROUND

With the development of information technology, intelligent speech technology has become widely adopted in various fields such as a smart home, a mobile device, and an in-car system. For a speech interaction, response speed is a key indicator of user experience.

Currently, in the industry, a general link process of the speech interaction may be described as the following: recording- end-point detection→recognition→understanding→feedback. During the recording process, when a result of the end-point detection indicates that no speech has been input for a fixed period, a speaker is determined to have stopped speaking. In this case, the recognition process, the understanding process, and the feedback process may be executed in subsequent. Therefore, the speaker has to wait for the fixed period, as well as another period for executing the speech recognition process, the understanding processing, and etc., thereby resulting in relatively slow response speed and negatively affecting the user experience. Consequently, improving the response speed of the speech interaction has become a pressing issue to address.

The PCT application No. WO2018208497A2 discloses a low-latency operation of a digital assistant in an example process. In this example, natural language processing, task flow processing, dialogue flow processing, speech synthesis, or any combination thereof can be at least partially performed while awaiting detection of a speech end-point condition. Upon detection of a speech end-point condition, results obtained from performing the operations can be presented to the user. In another example, robust operation of a digital assistant is provided. In this example, task flow processing by the digital assistant can include selecting a candidate task flow from a plurality of candidate task flows based on determined task flow scores. The task flow scores can be based on speech recognition confidence scores, intent confidence scores, flow parameter scores, or any combination thereof. The selected candidate task flow is executed and corresponding results presented to the user.

The US patent application No. US10134425B1 discloses a system for determining an endpoint of an utterance during automatic speech recognition (ASR) processing that accounts for the direction and duration of the incoming speech. Beamformers of the ASR system may identify a source direction of the audio. The system may track the duration speech has been received from that source direction so that if speech is detected in another direction, the original source speech may be weighted differently for purposes of determining an endpoint of the utterance. Speech from a new direction may be discarded or treated like non-speech for purposes of determining an endpoint of speech from an original direction.

The US patent application No. US9437186B1 discloses a system that provides early results and/or incorporates semantic tagging, which may improve the process of determining the end of an utterance for purposes of automatic speech recognition (ASR). Early ASR results of an incoming utterance may be prepared based at least in part on an estimated endpoint and processed by a natural language understanding (NLU) process while final results, based at least in part on a final endpoint, are determined. If the early results match the final results, the early NLU results are already prepared for early execution. The endpoint may also be determined based at least in part on the content of the utterance, as represented by semantic tagging output from ASR processing. If the tagging indicates completion of a logical statement, an endpoint may be declared, or a threshold for silent frames prior to declaring an endpoint may be adjusted.

### SUMMARY OF THE DISCLOSURE

A technical solution of the present disclosure is to provide a speech processing method, an electronic device, and a computer-readable storage medium to improve response speed of a speech interaction.

The invention is set out in the appended set of claims.

In the technical solutions above, during the speech collection process, the blank speech that lasts to the current moment is continuously obtained and whether the speech duration is not less than the first detection period is determined. The threshold period for detecting whether the speech input has completely stopped is not less than the first detection period. Each detection period is not greater than the threshold period. In response to the speech duration being not less than the first detection period, a speech processing result based on a valid speech collected up to the current moment is obtained and a reference moment based on an endpoint moment of the blank speech is determined. In this way, the detection period that is immediately after the latest used detection period is further taken as the reference period and whether the reference speech that is continuously collected for the reference period from the reference moment is blank is determined. In response to the reference speech being not blank, the speech processing result is discarded and the operation that continuously obtains the blank speech that lasts to the current moment is re-executed based on the current progress of speech collection. In response to the reference speech being blank and at least one detection period remaining unused, the reference moment is updated based on an endpoint moment of a latest collected reference speech, and the operation that takes the detection period immediately after the latest used detection period as the reference period and the subsequent operations are re-executed. In response to the reference speech being blank and every detection period being used, the latest obtained speech processing result is validated. Thus, through expanding the threshold period that is used to detect whether the speech input has completely stopped to the multiple detection periods in series while ensuring that each of the multiple detection periods is not greater than the threshold period, a single-stage detection that adopts the threshold period to determine whether the speech input has completely stopped is transformed into a multi-stage detection that adopts the multiple detection periods to determine whether the speech input has completely stopped, and the speech processing result is obtained for the time being after a first detection stage. In this way, when a mid-stage detection is not blank, the detection is re-performed starting from the first stage based on the current progress of the speech collection. When each subsequent detection stage is blank, the speech processing result obtained previously is directly validated and a response may be made without waiting. Therefore, the response speed of the speech interaction may be improved.

### BRIEF DESCRIPTION OF THE DRAWINGS

In order to illustrate the technical solutions in the embodiments of the present disclosure more clearly, the drawings needed for the description of the embodiments will be briefly introduced below. Obviously, the drawings in the following description are applied to only some embodiments of the present disclosure. For those ordinary skilled in the art, other drawings can further be obtained based on these drawings without creative work.
FIG. 1 is a flowchart of a speech processing method according to an embodiment of the present disclosure.
FIG. 2 is a schematic block view of a speech processing method according to an embodiment of the present disclosure.
FIG. 3 is a schematic block view of a speech processing method according to another embodiment of the present disclosure.
FIG. 4a is a schematic view of a single-endpoint detection according to an embodiment of the present disclosure.
FIG. 4b is a schematic view of a two-endpoint detection according to an embodiment of the present disclosure.
FIG. 4c is a schematic view of a multi-endpoint detection according to an embodiment of the present disclosure.
FIG. 5 is a structural block view of a speech processing apparatus according to an embodiment of the present disclosure.
FIG. 6 is a structural block view of an electronic device according to an embodiment of the present disclosure.
FIG. 7 is a structural block view of a computer-readable storage medium according to an embodiment of the present disclosure.

### DETAILED DESCRIPTION

The solutions of the embodiments of the present disclosure will be described in detail below with reference to the accompanying drawings.

In the following description, specific details such as specific system structures, interfaces, technologies, etc. are provided for the purpose of explanation and not limitation, so as to facilitate a thorough understanding of the present disclosure.

The terms "system" and "network" are often used interchangeably herein. The term "and/or" in this article is just an association relationship that describes related objects, indicating that three relationships can exist. For example, A and/or B can refer to three situations: A exists alone, A and B exist simultaneously, and B exists alone. In addition, the character "/" in this article generally indicates that the related objects have an "or" relationship. In addition, "many" in this article means two or more than two.

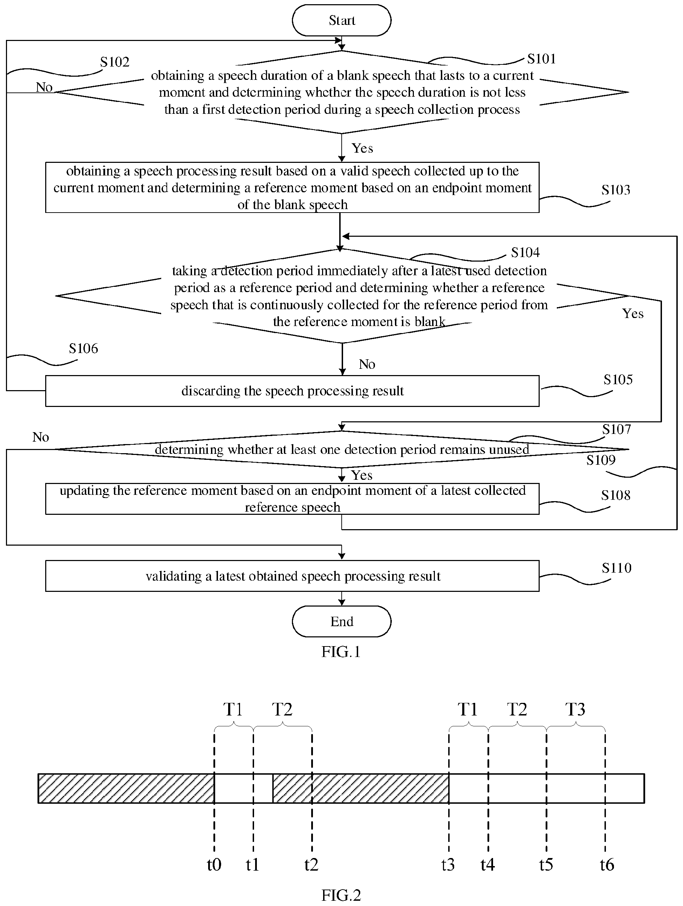

As illustrated in FIG. 1, FIG. 1 is a flowchart of a speech processing method according to an embodiment of the present disclosure. Specifically, the method may include the following operations.

At operation S101: obtaining a speech duration of a blank speech that lasts to a current moment and determining whether the speech duration is not less than a first detection period during a speech collection process. When the speech duration is less than the first detection period, operation S102 is taken as the next operation. Otherwise, operation S103 is taken as the next operation.

In the embodiments of the present disclosure, a threshold period for detecting whether a speech input has ended is expanded to multiple detection periods in series. Each of the detection periods is not greater than the threshold period. It should be noted that the multiple detection periods in series may be two detection periods, three detection periods, or more than three detection periods, which is not limited herein.

In an implementation scenario, a sum of the multiple detection periods in series is equal to the threshold period. Specifically, the threshold period may be equally divided into the multiple detection periods. For example, assuming that the threshold period is 6 seconds, the threshold period may be equally divided into 6 detection periods, that is, each detection period is 1 second; or, the threshold period may be differentially divided into multiple detection periods such that each detection period is different from at least one of the others. That is, some detection periods may be the same and some detection periods may be different. For example, again taking the threshold period of 6 seconds as an example, the threshold period may be differentially divided into 6 detection periods as follows: 0.5 seconds, 0.5 seconds, 1 second, 1 second, 1 second, 2 seconds. Apparently, the threshold period may alternatively be differentially divided into multiple detection periods that are completely different from one another. For example, again taking the threshold period of 6 seconds as an example, the threshold period may be differentially divided into 3 detection periods as follows: 1 second, 2 seconds, and 3 seconds. Other situations may be analogically deduced and will not be further illustrated herein. In addition, when the sum of the multiple detection periods in series is equal to the threshold period, the multiple detection periods in series may be sorted in a certain order (for example, from smallest to largest, or from largest to smallest). Apparently, the multiple detection periods in series may alternatively have a random order, which is not limited herein.

In an implementation scenario, in contrast to the above method, a maximum one of the multiple detection periods in series may be set as the threshold period. The multiple detection periods in series are different from each other and are sorted from smallest to largest. For example, taking the threshold period of 6 seconds as an example, the multiple detection periods in series may be the following: 1 second, 2 seconds, 3 seconds, 4 seconds, 5 seconds, and 6 seconds. Alternatively, the multiple detection periods in series may be the following: 1 second, 3 seconds, 5 seconds, and 6 seconds. Alternatively, the multiple detection periods in series may be the following: 1 second, 3 seconds, and 6 seconds. That is to say, a specific number of the multiple detection periods in series is not limited herein.

In an implementation scenario, the multiple detection periods in series expanded from the threshold period may be configured by default by a local device that performs a speech interaction. Apparently, a speaker may customize the multiple detection periods configured on the local device based on his or her own needs, which is not limited herein. For example, when the speaker expects response speed of the speech interaction to be faster, the first detection period, that is, the first one of the multiple detection periods in series, may be shortened. Alternatively, when the speaker expects the response speed of the speech interaction to be slower, the first detection period may be lengthened. It should be noted that in a case where the sum of the multiple detection periods in series is equal to the threshold period, in response to the speaker customizing the first detection period, the remaining of the multiple detection periods may be automatically adjusted accordingly to ensure the sum of the multiple detection periods to remain equal to the threshold period.

In another implementation scenario, in response to a registered account being logged in to the local device, configuration information that is synchronized by the registered account after the registered account is logged in to another device may be obtained and further loaded to the local device. The configuration information includes the multiple threshold periods in series that are expanded from the threshold period. It should be noted that the registered account may be an account registered by the speaker for using a speech interaction service (such as a speech assistant, and etc.) and the registered account may be universal on all devices that the speech interaction service is executable on. The account may be applied to, for example, a television, an in-vehicle device, a mobile phone, a tablet, a smart speaker, and etc., which are not limited herein. For example, after the registered account is logged in to the mobile phone, the speaker may make a customized modification to default configuration information and the modified configuration information may then be synchronized to a server. When the speaker logs in the registered account using the in-vehicle device later, the in-vehicle device may obtain the configuration information from the server and load the configuration information, thereby avoiding a repeated manual setting and facilitating a cross-platform interoperability.

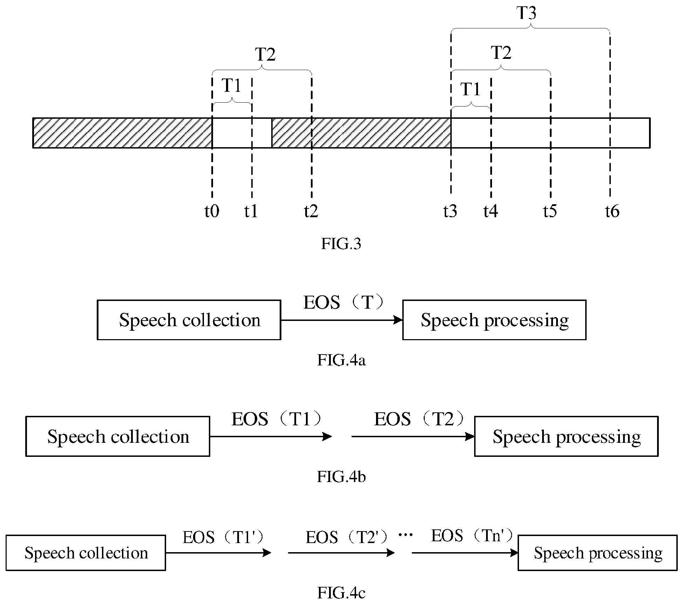

In an implementation scenario, the current moment represents a current progress of the speech collection. Please refer to FIGS. 2 or 3, FIG. 2 is a schematic block view of a speech processing method according to an embodiment of the present disclosure, and FIG. 3 is a schematic block view of a speech processing method according to another embodiment of the present disclosure. As illustrated in FIGS. 2 or 3, a diagonally shaded portion represents a valid speech and a white filled portion represents the blank speech. It should be noted that during an actual application, an amplitude of a speech signal, and etc., may be used to determine whether the speech signal is the valid speech. For example, when the amplitude is higher than a first threshold, the speech signal is determined to be the valid speech. When the amplitude is not higher than the first threshold, the speech signal is determined to be the blank speech. More information may refer to technical details such as a voice activity detection (VAD), and etc., which will not be repeated herein. Since the speech collection is a continuous process, the current moment may change along with the progress of speech collection. Please further refer to FIGS. 2 or 3, when the speaker pauses briefly (that is, a first valid speech ends), the current moment of the speech collection process is moment t0. Similarly, when the speaker pauses for a long time (that is, a second valid speech ends), the current moment of speech collection is moment t3. Other situations may be analogically deduced and will not be further illustrated herein.

In an implementation scenario, for the current moment of different types, the speech duration of the blank speech that lasts to the current moment may be calculated differently. For example, when the current moment represents an end moment of a particular valid speech or a starting moment of a particular blank speech (for example, the moment t0 and the moment t3 mentioned above), the speech duration of the blank speech that lasts to the current moment (for example, the moment t0 and the moment t3) is 0 second. In contrast, when the current moment represents a starting moment of a particular valid speech or an end moment of a particular blank speech, the speech duration of the blank speech that lasts to the current moment refers to an entire duration of the particular blank speech. Apparently, when the current moment is within a particular valid speech (for example, moment t2), since the speaker is performing the speech input at the current moment, the speech duration of the blank speech that lasts to the current moment is 0 second. Similarly, when the current moment is during a particular blank speech (for example, moment t1, moment t4, moment t5, and moment t6), since the speaker is not performing the speech input at the current moment, the speech duration of the blank speech that lasts to the current moment starts from a starting point of the particular blank speech to the current moment. When the current moment is the moment t1, the speech duration of the blank duration that lasts to the current moment is from the moment t0 to the moment t1. When the current moment is the moment t4, the speech duration of the blank speech that lasts to the current moment is from the moment t3 to the moment t4. When the current moment is the moment t5, the speech duration of the blank speech that lasts to the current moment is from the moment t3 to the moment t5. When the current moment is the moment t6, the speech duration of the blank speech that lasts to the current moment is from the moment t3 to the moment t6. Other situations may be analogically deduced and will not be further illustrated herein.

In an implementation scenario, for the convenience of description, the multiple detection periods in series may be denoted as T1, T2, and T3, respectively. Please refer to FIGS. 2 or 3, when the current moment is before the moment t0, since the speech moment is 0 second, the speech duration is determined to be less than the first detection period T1. When the current moment is between the moment t0 and the moment t1, the speech duration is determined to be less than the first detection period T1. When the current progress of the speech collection reaches the moment t1, the speech duration is determined to be equal to the first detection period T1. Other situations may be analogically deduced and will not be further illustrated herein.

It should be noted that during the speech collection process, the following situations may exist: the speaker continues performing the speech input, the speaker pauses briefly, the speaker has completely stopped performing the speech input, and so on. Duration of the blank speech in these situations are different. In a case where the speech duration of the blank duration that lasts to the current moment is less than the first detection period, in order to accurately determine whether a current stop of the speaker is a short pause caused by a short-term thinking of the speaker and other reasons or a long-term stop due to the speaker ending the speech input, whether the speech duration of the blank duration that lasts to the current moment is not less than the first detection period is necessary to be kept determining as the speech collection continues to progress.

At operation S102: re-executing the operation S101 and subsequent operations based on the current progress of speech collection.

Specifically, when the speech duration is less than the first detection period, the aforementioned operation S101 may be continuously re-executed as the speech collection continues to progress, until the speech duration is determined to be not less than the first detection period based on the current progress of speech collection. Please further refer to FIGS. 2 or 3, when the current moment is before the moment t1, since the speech duration remains to be less than the first detection period T1, the above operation S101 keeps being repeated as the speech collection continues to progress until the current progress of speech collection reaches the moment t1. Other situations may be analogically deduced and will not be further illustrated herein.

At operation S103: obtaining a speech processing result based on a valid speech collected up to the current moment and determining a reference moment based on an endpoint moment of the blank speech.

Specifically, when the speech duration of the blank speech that lasts to the current moment is not less than the first detection period, the speaker is determined to stop performing the speech input. However, whether the current stop is the short pause (for example, the speaker pauses speaking due to the short-term thinking and other reasons, but may continue to speak immediately) or the long-term stop (that is, the speaker has completely stopped or finished performing the speech input) is not clear yet. However, in order to ensure the speaker to be responded to as quickly as possible when the current stop is the long-term stop, the speech processing result may be obtained based on the valid speech collected up to the current moment for the time being.

In an implementation scenario, in the case of the valid speech collected up to the current moment, the "current moment" refers to a speech collection moment when a duration of detected speech is not less than the first detection period. Please further refer to FIGS. 2 or 3, as mentioned above, when the current moment is the moment t1, the speech duration of the blank speech that lasts to the current moment is not less than the first detection period. In this case, the valid speech collected up to the moment t1 (that is, the first valid speech in FIGS. 2 or 3) may be obtained and the speech processing result is thus obtained accordingly. For the convenience of description, the speech processing result obtained at the moment t1 may be denoted as P1. Other situations may be analogically deduced and will not be further illustrated herein. In addition, a specific meaning of the valid speech may refer to relevant description mentioned above and will not be repeated herein.

In an implementation scenario, a processing on the valid speech collected up to the current moment may include but is not limited to the following: speech recognition, semantic understanding, and etc., which are not limited herein. Further, the speech processing result may include but is not limited to the following: recognized text, speech intention, and etc., which are not limited herein.

In a specific implementation scenario, when the speech processing result includes the recognized text, network models such as a convolutional neural network, a long short-term memory network, a recurrent neural network, and etc., may be used to recognize the valid speech to obtain the recognized text. A specific process of the speech recognition for the valid speech may refer to the technical details of the speech recognition mentioned above and will not be repeated herein.

In a specific implementation scenario, when the speech processing result includes the speech intention, the speech recognition may first be performed on the valid speech to obtain the recognized text, and the semantic understanding may then be performed on the recognized text to obtain the speech intention. It should be noted that speech intention may include but is not limited to the following: checking weather, booking a ticket, booking a hotel, searching for a movie, searching for a music, and etc., which are not limited herein. For example, an intention recognition may be performed on the recognized text through a rule template matching or a deep learning model such as the convolutional neural network or the long short-term memory network, which is not limited herein. A specific process of the intention recognition for the recognized text may refer to technical details of the intention recognition and will not be repeated herein.

In an implementation scenario, when the speech duration of the blank speech that lasts to the current moment is not less than the first detection period, the reference moment may be further determined based on the endpoint moment of the blank speech. A specific use of the reference moment may refer to relevant description below, which will not be repeated herein. Specifically, when the threshold period is equal to the sum of the multiple detection periods, the endpoint moment may be the end moment. When the threshold period is equal to the maximum one of the multiple detection periods, the endpoint moment may be the starting moment.

In a specific implementation scenario, please refer to FIG. 2, when the threshold period is equal to the sum of the multiple detection periods, since the speech duration of the blank speech that lasts to the current moment t1 is not less than the first detection period T1, the reference moment may be obtained based on the end time of the blank speech from t0 to t1, that is, the moment t1. Specifically, the end time of the blank speech from t0 to t1, that is, the moment t1, may be directly taken as the reference moment. Other situations may be analogically deduced and will not be further illustrated herein.

In a specific implementation scenario, please refer to FIG. 3, in contrast to the above method, when the threshold period is equal to the maximum one of the multiple detection periods, since the speech duration of the blank speech that lasts to the current moment t1 is not less than the first detection period T1, the reference moment may be obtained based on the starting moment of the blank speech from t0 to t1, that is, the moment t0. Specifically, the starting moment of the blank speech from t0 to t1, that is, the moment t0, may be directly taken as the reference moment. Other situations may be analogically deduced and will not be further illustrated herein.

At operation S104: taking a detection period immediately after a latest used detection period as a reference period and determining whether a reference speech that is continuously collected for the reference period from the reference moment is blank. When the reference speech is not blank, operation S105 is taken as the next operation. Otherwise, operation S107 is taken as the next operation.

Specifically, as mentioned above, the multiple detection periods are arranged in series. Thus, after the reference moment is determined, one of the multiple detection periods that is immediately after the latest used one of the multiple detection periods may be directly taken as the reference period. Taking the multiple detection periods T1, T2 and T3 as an example again, since the speech duration of the blank speech that lasts to the moment t1 is not less than the first detection period T1, a detection period immediately after the first detection period T1 is T2, that is, the detection period T2 may be taken as the reference period. Other situations may be analogically deduced and will not be further illustrated herein.

In an implementation scenario, please refer to FIG. 2, as mentioned above, when the threshold period is equal to the sum of the multiple detection periods, the reference moment is the moment t1. In this case, as the speech collection continues to progress, at the moment t2, the reference speech that is continuously collected from the moment t1 for the reference period T2 (that is, the speech from the moment t1 to the moment t2 in FIG. 2) may be obtained and whether the reference speech is blank is thus determined.

In an implementation scenario, please refer to FIG. 3, as mentioned above, when the threshold period is equal to the maximum one of the multiple detection periods, the reference moment is the moment t0. In this case, as the speech collection continues to progress, at the moment t2, the reference speech that is continuously collected from the moment t0 for the reference period T2 (that is, the speech from the moment t0 to the moment t2 in FIG. 3) may be obtained and whether the reference speech is blank is thus determined.

In an implementation scenario, a specific determination process of the blank speech may refer to relevant description mentioned above and will not be repeated herein. For example, according to the reference speech in FIG. 2 (that is, the speech from the moment t1 to the moment t2 in FIG. 2) or the reference speech in FIG. 3 (that is, the speech from the moment t0 to the moment t2 in FIG. 3), since the reference speech contains speech information inputted by the speaker, the reference speech is determined to be not blank. Other situations may be analogically deduced and will not be further illustrated herein.

At operation S105: discarding the speech processing result.

Specifically, when the reference speech is not blank, the aforementioned speech processing result may be discarded. In other words, since the reference speech is not blank, the speaker is determined to briefly pause the speech input due to the short-term thinking and other reasons, rather than completely stopping the speech input. Therefore, an interaction with the speaker has not needed to be performed yet and the speech processing result may be discarded. For example, when a complete speech input intended by the speaker is the following: "Help me book a ticket to Hefei for tomorrow. Forget it, let's book it for the day after tomorrow", a blank speech starts from an end moment of the first "tomorrow" to a staring moment of "Forget it" due to a short pause before the "Forget it". In this case, a speech processing result of a valid speech "Help me book a ticket to Hefei for tomorrow" may be obtained. However, since the reference speech that is continuously collected from the reference moment for the reference period is not blank, the speech processing result of the "Help me book a ticket to Hefei for tomorrow" may be discarded and the subsequent operations are then executed.

It should be noted that after a speech recognition result is obtained in the aforementioned operation S103, the speech recognition result may be cached. For example, the speech recognition result may be cached in a storage medium, such as a memory or a hard disk. When the speech processing result is determined to be discarded, the speech processing result cached in the storage medium, such as the memory or the hard disk, may be deleted.

At operation S106: re-executing the operation S101 and the subsequent operations based on the current progress of speech collection.

Specifically, since the speaker has not finished the speech input yet, the speech collection is still in progress. In this way, the operation S101 and the subsequent operations mentioned above may be re-executed based on the current progress of speech collection. For example, please refer to FIGS. 2 or 3, since the reference speech is determined to be not blank at the moment t2, that is, the speaker has not finished performing the speech input, the speech duration of the blank speech that lasts to the current moment may continue to be obtained based on the current progress of speech collection and whether the speech duration is not less than the first detected duration may be determined accordingly. Specifically, as the speech collection continues to progress, the blank speech that lasts to the current moment remains 0 second until the moment t3. When the current moment is the moment t4, since the blank speech that lasts to the moment t4 (that is, the speech from the moment t3 to the moment t4) is not less than the first detection period T1, the valid speech (that is, the first valid speech and the second valid speech) up to the current moment (that is, the moment t4) may be used to obtain the speech processing result. For the convenience of description, the speech processing result obtained at the moment t4 may be denoted as P2. In this way, the detection period (that is, the detection period T2) immediately after the latest used detection period (that is, the detection period T1) is taken as the reference period and whether the reference speech that is continuously collected for the reference period from the reference moment is blank is determined. As illustrated in FIG. 2, when the threshold period is equal to the sum of the multiple detection periods, the reference speech is the speech from the moment t4 to the moment t5. Alternatively, as illustrated in FIG. 3, when the threshold period is the maximum one of the multiple detection periods, the reference speech is the speech from the moment t3 to the moment t5. Since the reference speech is blank, the relevant operations in subsequent may continue to be executed. It should be noted that FIGS. 2 and 3 only illustrate one possible situation of the speech interaction and may not limit other situations that may occur during the speech interaction.

At operation S107: determining whether at least one detection period remains unused. When at least one detection period remains unused, operation S108 is taken as the next operation. Otherwise, operation S110 is taken as the next operation.

Specifically, when the reference speech is blank, a possibility of the speaker completely stopping the speech input is determined to be increased. However, for a further confirmation, whether at least one of the multiple detection periods remains unused may continue to be determined. When at least one of the multiple detection periods remains unused, a next detection stage may be performed based on one of the multiple detection periods that is immediately after the latest used one of the multiple detection periods. When all of the multiple detection periods have been used, the speaker is determined to completely stop performing the speech input.

At operation S108: updating the reference moment based on an endpoint moment of a latest collected reference speech.

As mentioned above, when the threshold period is equal to the sum of the multiple detection periods, the endpoint moment is the end moment. When the threshold period is equal to the maximum one of the multiple detection periods, the endpoint moment is the starting moment.

In an implementation scenario, when the threshold period is equal to the sum of the multiple detection periods, the end moment of the latest collected reference speech may be taken as an updated reference moment. For example, please refer to FIG. 2, since the speech collection currently reaches the moment t5, the latest collected reference speech is from the moment t4 to the moment t5. Therefore, the reference moment may be updated to the end moment of the latest collected reference speech, that is, the moment t5. Other situations may be analogically deduced and will not be further illustrated herein.

In an implementation scenario, when the threshold period is equal to the maximum one of the multiple detection periods, the starting moment of the latest collected reference speech may be taken as the updated reference moment. For example, please refer to FIG. 3, since the speech collection currently reaches the moment t5, the latest collected reference speech is from the moment t3 to the moment t5. Therefore, the reference moment can be updated to the starting moment of the latest collected reference speech, that is, the moment t3. Other situations may be analogically deduced and will not be further illustrated herein.

At operation S109: re-executing the operation S104 and subsequent operations.

Specifically, one of the multiple detection periods that is immediately after the latest used one of the multiple detection periods may be taken as the reference period and whether the reference speech that is continuously collected for the reference period from the reference moment is blank may be determined. Please further refer to FIGS. 2 or 3, when the speech collection reaches the moment t5, the detection period immediately after the latest used detection period (that is, the period T2) is the period T3 and the period T3 may be taken as the reference period. When the threshold period is equal to the sum of the multiple detection periods, whether the reference speech that is continuously collected for the reference period T3 from the reference moment t5 (that is, the speech from the moment t5 to the moment t6) is blank is determined. Alternatively, when the threshold period is equal to the maximum one of the multiple detection periods, whether the reference speech that is continuously collected for the reference period T3 from the reference moment t3 (that is, the speech from the moment t3 to the moment t6) is blank is determined. Other situations may be analogically deduced and will not be further illustrated herein.

At operation S110: validating a latest obtained speech processing result.

Specifically, when the reference speech that is continuously collected for the reference period from the reference moment is blank and all of the multiple detection periods have been used, all detection stages are determined to be completely executed. In this case, the speaker is determined to completely stop performing the speech input and the latest obtained speech processing result may thus be validated. It should be noted that "validating" refers to not discard the speech processing result and to store a latest obtained speech recognition result in a volatile storage medium, such as a memory, which enables the speech processing result to be quickly called later. Alternatively, the latest obtained speech recognition result may be stored in a non-volatile storage medium, such as the hard disk, which is not limited herein. In this way, in response to the latest obtained speech processing result fulfilling a preset condition, the interaction with the speaker may be performed based on the latest obtained speech processing result. Alternatively, in response to the latest obtained speech processing result failing to fulfill the preset condition, the interaction with the speaker is refused.

In an implementation scenario, taking the multiple detection periods T1, T2, and T3 in series as an example again, please refer to FIGS. 2 or 3, when the speech collection process reaches the moment t6, since the reference speech is blank and all of the multiple detection periods have been used, the speaker is determined to completely stop performing the speech input, and the latest obtained speech processing result, that is, the speech processing result P2, may be validated.

In an implementation scenario, taking the complete speech input of the speaker being "Help me book a ticket to Hefei for tomorrow. Forget it, let's book it for the day after tomorrow" as an example again, after the first detection period from the second "tomorrow", the speech processing result of the valid speech "Help me book a ticket to Hefei for tomorrow. Forget it, let's book it for the day after tomorrow" may be obtained and the speech is determined to remain blank after each of the multiple detection periods in subsequent. Therefore, the speech processing result of "Help me book a ticket to Hefei for tomorrow. Forget it, let's book it for the day after tomorrow" may be validated.

In an implementation scenario, when the latest obtained speech processing result includes the recognized text, the aforementioned preset condition may be set to include any one of the following: the recognized text contains a preset wake-up word, a semantic perplexity (ppl) of the recognized text is not higher than a preset threshold, the speech intention is further recognizable based on the recognized text, and etc., which are not limited herein. For example, in a speech wake-up scenario, when the recognized text contains the preset wake-up words (for example, "Xiao X Xiao X", and etc.), the interaction with the speaker may be performed through responding to the speaker with "Hey, Hello", "Hey, I'm here", "Hey, I'm listening", and other speech responses. In contrast, when the recognized text does not contain the preset wake-up word, the interaction with the speaker is refused. Other situations may be analogically deduced and will not be further illustrated herein.

In an implementation scenario, as mentioned above, when the speech processing result includes the recognized text, the recognized text may be displayed to the speaker during the interaction with the speaker based on the speech processing result. For example, in an online meeting scenario, after the recognized text is obtained, the recognized text may be displayed on the screen, which enables the speaker (such as the current speaker and other speakers participating in the meeting) to see the recognized text on the screen promptly, thereby minimizing a problem of a participant failing to obtain information in time due to delays in a transmission of large data, such as speech and video, and improving the user experience. Moreover, the speech processing result may further include a translated text. The translated text may be translated from the recognized text. For example, when the recognized text is in Chinese and the online meeting scenario involves both Chinese and English, the speech processing result may further include an English text translated from the Chinese text, thereby satisfying the demand of a multi-lingual meeting scenario. Other situations may be analogically deduced and will not be further illustrated herein.

In an implementation scenario, as mentioned previously, the speech processing result includes the speech intention. The speech intention may be obtained through performing the intention recognition on the recognized text, which may refer to relevant description above for further details and will not be repeated herein. In this way, during the interaction with the speaker, according to the latest obtained speech processing result, the speaker may be responded to based on the speech intention. Specifically, after the speech intention of the speaker is obtained, actions such as outputting speech and performing operations may be taken in response to the speech intention. For example, in a smart vehicle scenario, when the speech intention of the speaker is to "open the sunroof", an operation of opening the sunroof may be performed to respond the speaker. Other situations may be analogically deduced and will not be further illustrated herein.

In an implementation scenario, as mentioned previously, the speech processing result includes the recognized text and the speech intention. The speech intention may be obtained through performing the intention recognition on the recognized text, which may refer to relevant description above for further details and will not be repeated herein. In this way, during the interaction with the speaker, according to the latest obtained speech processing result, the recognized text may be displayed to the speaker and the speaker may be responded to based on the speech intention. Specifically, the recognized text may be displayed on the screen and the speech intention may be responded to through outputting speech, performing operations, and so on. For example, in a smart home scenario, when a complete input speech of the speaker is that "I want to watch Peppa Pig", a recognized text "I want to watch Peppa Pig" or a key field of the recognized text, that is, "Peppa Pig" may be displayed on the TV screen and a search operation regarding the Peppa Pig may be performed to respond to the speaker. Other situations may be analogically deduced and will not be further illustrated herein.

In an implementation scenario, please refer to FIGS. 4a, 4b, and 4c, FIG. 4a is a schematic view of a single-endpoint detection according to an embodiment of the present disclosure. FIG. 4b is a schematic view of a two-endpoint detection according to an embodiment of the present disclosure. FIG. 4c is a schematic view of a multi-endpoint detection according to an embodiment of the present disclosure. It should be noted that the "single-endpoint detection" referred to herein means to set only one detection period (that is, the threshold period for determining whether the speech input has completely stopped), the "two-endpoint detection" referred to herein means to set two detection periods, and the "multi-endpoint detection" referred to herein means to set three or more detection periods. As illustrated in FIGS. 4a to 4c, EOS() indicates to perform an end-of-speech endpoint detection for a detection period indicated in parentheses. Under the same situation, as illustrated in FIG. 4a, when the single-endpoint detection is performed, time spent for the speech interaction is T+Ta, where T is the detection period and Ta is time required for the speech processing. As illustrated in FIG. 4b, when the two-endpoint detection is performed, time spent for the speech interaction is T1+Ta. As illustrated in FIG. 4c, when the multi-endpoint detection is performed, time spent for the speech interaction is T1'+Ta. As mentioned above, in the embodiments of the present disclosure, when the multiple detection periods in series are set, each of the multiple detection periods is not greater than the threshold period. Therefore, compared to the single-endpoint detection illustrated in FIG. 4a, the time spent by both the two-endpoint detection illustrated in FIG. 4b and the multi-endpoint detection illustrated in FIG. 4c is greatly reduced. The two-endpoint detection may theoretically reduce the time spent by T2 compared to the single-endpoint detection. The multi-endpoint detection may theoretically reduce the time spent by T2'+...+Tn' compared to the single-endpoint detection. In addition, in the embodiments of the present disclosure, the more multiple detection periods in series are set, the more time spent may be reduced theoretically. Apparently, considering that the more multiple detection periods in series are set, the more computing load is required, thus in order to balance time spent and computing load, a specific quantity of the multiple detection periods in series may be set to a moderately suitable number, such as two. Apparently, the specific quantity of the multiple detection periods that are set to balance the time spent and the computing load may be other than 2, for example, 3 and so on, which is not limited herein.

In an implementation scenario, considering that different speakers have different response speed demands for the speech interaction, in response to the latest obtained speech processing result fulfilling the preset condition, after the interaction with the speaker is performed based on the latest obtained speech processing result, evaluation information provided by the speaker regarding the response speed of the interaction may be obtained and, based on the evaluation information, the multiple detection periods expanded from the threshold period may be adjusted. It should be noted that the evaluation information may include any one of the following types: (1) the response speed is faster than expected and a slower response speed is preferred; (2) the response speed is slower than expected and a faster response speed is preferred; and (3) the response speed is moderate and the same response speed is preferred. For example, when the first type of evaluation information is provided, the first detection period may be appropriately lengthened, specifically through reducing the number of equal divisions for the threshold period or through increasing the first detection period and adaptively reducing the subsequent detection periods, and so on. Alternatively, when the second type of evaluation information is provided, the first detection period may be appropriately shortened, specifically through increasing the number of equal divisions for the threshold period or through reducing the first detection period and adaptively increasing the subsequent detection periods, and so on. Alternatively, when the third type of evaluation information is provided, the current detection period may remain unchanged. In the above method, through adaptively adjusting the multiple detection periods expanded from the threshold period based on the evaluation information provided by the speaker regarding the response speed of the interaction, the response speed may be set to match the user habit as much as possible.

In an implementation scenario, considering that different speakers may further have different speaking habits, for example, a pause duration of the elderly in speech may generally be slightly longer, while a pause duration of the younger in speech may generally be slightly shorter. Therefore, in order to avoid too much computing resource being consumed as a result of performing multiple detections due to a relatively long pause (still generally shorter than the threshold period) as much as possible, after validating the latest obtained speech processing result, an average pause duration of the speaker speaking during the speech collection process is calculated. It should be noted that a specific meaning for the pause duration of the speaker may refer to the aforementioned description of the "short pause", which will not be repeated herein. In addition, the average duration may be obtained through averaging the short pauses recorded during multiple speech interactions with the speaker. In this way, multiple detection periods expanded from the threshold period are adjusted based on the average duration. Specifically, in a case where the threshold period is equal to the sum of the multiple detection periods, when the average duration is not less than a sum of the first i detection periods (for example, the first two, the first three, and etc.), at least one of the multiple detection periods from the second one to the i-th one is lengthened and at least one of the multiple detection periods that is not the first detection period and has not been lengthened is shortened, which enables the sum of the multiple detection periods to remain equal to the threshold period, thereby minimizing the effects to the response speed and the computing load caused by multiple detections due to the relatively long pause. Alternatively, in a case where the threshold period is equal to the maximum one of the multiple detection periods, when the average duration is not less than the j-th detection period (for example, the 2nd, 3rd, and etc.), at least one of the multiple detection periods from the second one to the j-th one is lengthened while the threshold period is ensured to remain equal to the maximum one of the multiple detection periods after the lengthening, and the multiple detection periods are sorted from smallest to largest. In the above method, after validating the latest obtained speech processing result, the average pause duration of the speaker speaking during the speech collection process is calculated and the multiple detection periods expanded from the threshold period are adjusted based on the average duration, thereby avoiding the computing load caused by the multiple detections due to the relatively long pause as much as possible.

In the above method, through expanding the threshold period that is used to detect whether the speech input has completely stopped to the multiple detection periods in series while ensuring that each of the multiple detection periods is not greater than the threshold period, a single-stage detection that adopts the threshold period to determine whether the speech input has completely stopped is transformed into a multi-stage detection that adopts the multiple detection periods to determine whether the speech input has completely stopped, and the speech processing result is obtained for the time being after a first detection stage. In this way, when a mid-stage detection is not blank, the detection is re-performed starting from the first stage based on the current progress of the speech collection. When each subsequent detection stage is blank, the speech processing result obtained previously is directly validated and a response may be made without waiting. Therefore, the response speed of the speech interaction may be improved.

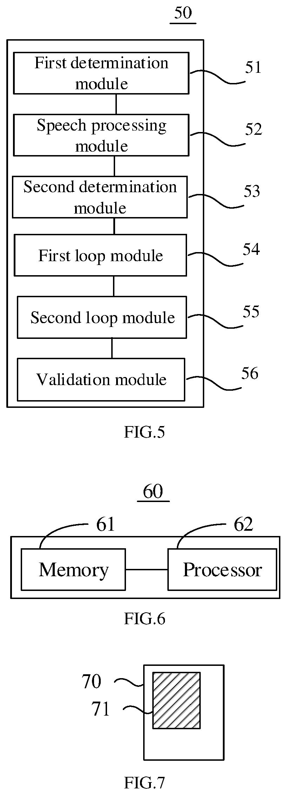

Please refer to FIG. 5, FIG. 5 is a structural block view of a speech processing apparatus 50 according to an embodiment of the present disclosure. The speech processing apparatus 50 includes: a first determination module 51, a speech processing module 52, a second determination module 53, a first loop module 54, a second loop module 55, and a validation module 56. The first determination module 51 is configured to perform operation S1: obtaining a speech duration of a blank speech that lasts to a current moment and determining whether the speech duration is not less than a first detection period during a speech collection process. The threshold period for detecting whether a speech input has stopped completely is expanded to multiple detection periods in series. Each of the multiple detection periods is not greater than the threshold period. The speech processing module 52 is configured to perform operation S2: in response to the speech duration being not less than the first detection period, obtaining a speech processing result based on a valid speech collected up to the current moment and determining a reference moment based on an endpoint moment of the blank speech. The second determination module 53 is configured to perform operation S3: taking one of the multiple detection periods that is immediately after a latest used one of the multiple detection periods as a reference period and determining whether a reference speech that is continuously collected for the reference period from the reference moment is blank. The first loop module 54 is configured to perform operation S4.1: in response to the reference speech being not blank, discarding the speech processing result and re-executing the operations S1 to S3 based on the current progress of speech collection. The second loop module 55 is configured to perform operation S4.2: in response to the reference speech being blank and at least one of the multiple detection periods remaining unused, updating the reference moment based on an endpoint moment of a latest collected reference speech and re-executing the operation S3. The validation module 56 is configured to perform operation S4.3: in response to the reference speech being blank and all of the multiple detection periods being used, validating a latest obtained speech processing result.

In the above method, through expanding the threshold period that is used to detect whether the speech input has completely stopped to the multiple detection periods in series while ensuring that each of the multiple detection periods is not greater than the threshold period, a single-stage detection that adopts the threshold period to determine whether the speech input has completely stopped is transformed into a multi-stage detection that adopts the multiple detection periods to determine whether the speech input has completely stopped, and the speech processing result is obtained for the time being after a first detection stage. In this way, when a mid-stage detection is not blank, the detection is re-performed starting from the first stage based on the current progress of the speech collection. When each subsequent detection stage is blank, the speech processing result obtained previously is directly validated and a response may be made without waiting. Therefore, the response speed of the speech interaction may be improved.

In some embodiments, the threshold period is equal to the sum of the multiple detection periods. Alternatively, the threshold period is equal to the maximum one of the multiple detection periods, the multiple detection periods are different from each other and are arranged in order from smallest to largest.

Therefore, through setting the threshold period to be equal to the sum of the multiple detection periods or the maximum one of the multiple detection periods, the multiple detection periods are different from each other and are arranged in order from smallest to largest, thereby further improve the flexibility in setting the multiple detection periods in series.

In some embodiments, the speech processing module 52 is configured to, in response to the threshold period being equal to the sum of the multiple detection periods, determine the end moment of the blank speech to be the reference moment. The second loop module 55 is configured to, in response to the threshold period being equal to the sum of the multiple detection periods, take the end moment of the latest collected reference speech as the updated reference moment.

Therefore, when the threshold period is equal to the sum of the multiple detection periods, the end moment of the blank speech is determined to be the reference moment and the end moment of the latest collected reference speech is taken as the updated reference moment. Therefore, when the threshold period is set to be the sum of the multiple detection periods, the reference moment is determined and updated adaptively, thereby facilitating to improve the accuracy of detecting the blank speech.

In some embodiments, the speech processing module 52 is configured to, in response to the threshold period being equal to the maximum one of the multiple detection periods, determine the starting moment of the blank speech to be the reference moment. The second loop module 55 is configured to, in response to the threshold period being equal to the maximum one of the multiple detection periods, take the starting moment of the latest collected reference speech to be the updated reference moment.

Therefore, when the threshold period is equal to the maximum one of the multiple detection periods, the starting moment of the blank speech is determined as the reference moment, and the starting moment of the latest collected reference speech is taken as the updated reference moment. Therefore, when the threshold period is set to be the maximum one of the multiple detection period, the reference moment is determined and updated adaptively, thereby facilitating to improve the accuracy of detecting the blank speech.

In some embodiments, the speech processing apparatus 50 may further include a third loop module. The third loop module is configured to, in response to the speech duration being less than the first detection period, re-execute the operation S1 and the subsequent operations based on the current progress of speech collection.

Therefore, when the speech duration is less than the first detection period, based on the current progress of speech collection, the operation of obtaining the speech duration of the blank speech that lasts to the current moment during the speech collection process and the subsequent operations during the speech collection process are re-executed, thereby facilitating accurately determine whether a current stop of the speaker is a short pause caused by a short-term thinking of the speaker and other reasons or a long-term stop due to the speaker ending the speech input.

In some embodiments, the validation module 56 includes a display sub-module. The display sub-module is configured to, in response to the speech processing result containing the recognized text, display the recognized text to the speaker. The validation module 56 includes a response sub-module. The response sub-module is configured to, in response to the speech processing result containing the speech intention, respond to the speaker based on the speech intention. The validation module 56 includes the display sub-module and the response sub-module. The display sub-module is configured to display the recognized text to the speaker. The response sub-module is configured to respond to the speaker based on the speech intention.

Therefore, when the speech processing result includes different types of data, the interaction with the speaker may be performed in different ways, thereby facilitating an interactive experience of the speaker.

In some embodiments, the speech processing apparatus 50 further includes an evaluation obtaining module. The evaluation obtaining module is configured to obtain the evaluation information provided by the speaker regarding the response speed of the interaction. The speech processing apparatus 50 further includes a first adjustment module. The first adjustment module is configured to adjust the multiple detection periods expanded from the threshold period based on the evaluation information.

Therefore, through adaptively adjusting the multiple detection periods expanded from the threshold period based on the evaluation information of the speaker regarding the response speed for the interaction, the response speed may be set to match the user habit as much as possible.

In some embodiments, the speech processing apparatus 50 further includes a pause calculation module. The pause calculation module is configured to calculate the average pause duration of the speaker speaking during the speech collection process. The speech processing apparatus 50 further includes a second adjustment module. The second adjustment module is configured to adjust the multiple detection periods expanded from the threshold period based on the average pause duration.

Therefore, through validating the latest obtained speech processing result, calculating the average pause duration of the speaker speaking during the speech collection process, and adjusting the multiple detection periods expanded from the threshold period based on the average duration, the computing load caused by the multiple detections due to the relatively long pause may be avoided as much as possible.

In some embodiments, the speech processing apparatus 50 further includes a configuration obtaining module. The configuration obtaining module is configured to, in response to the local device logging in with the registered account, obtain the configuration information that is synchronized by the registered account after the registered account is logged in to another device. The speech processing apparatus 50 further includes a configuration loading module. The configuration loading module is configured to load the configuration information to the local device. The configuration information includes the multiple detection periods in series that are expanded from the threshold period.

Therefore, in response to the registered account being logged in to the local device, the configuration information that is synchronized by the registered account after the registered account is logged in to another device is obtained and further loaded to the local device. The configuration information includes the multiple detection periods in series that are expanded from the threshold period, which avoids the repeated manual setting and facilitating the cross-platform interoperability.

In some embodiments, the threshold period is expanded to two detection periods in series.

In this way, the two detection periods in series that are expanded from the threshold period may balance the time spent and computing load.

Please refer to FIG. 6, FIG. 6 is a structural block view of an electronic device 60 according to an embodiment of the present disclosure. The electronic device 60 includes a memory 61 and a processor 62 that are coupled to each other. The memory 61 stores a program instruction. The processor 62 is configured to execute the program instruction to implement the operations in any one of the speech processing method embodiments mentioned above. Specifically, the electronic device 60 may include but is not limited to the following: a desktop computer, a laptop computer, a mobile phone, a tablet computer, a self-service machine, a robot, and etc., which are not limited herein. In addition, the electronic device 60 may further include a sound pickup circuit (not illustrated in the figures) coupled to the processor 62. The sound pickup circuit may include but is not limited to a microphone, and so on. In addition, the electronic device 60 may further include a human-computer interaction circuit (not illustrated in the figures) coupled to the processor 62. The human-computer interaction circuit may include but is not limited to the following: a display screen, a speaker, and etc., which are not limited herein.

Specifically, the processor 62 is configured to control itself and the memory 61 to implement the operations in any one of the speech processing method embodiments mentioned above. The processor 62 may further be referred to as a central processing unit (CPU). The processor 62 may be an integrated circuit chip with signal processing capabilities. The processor 62 may further be a general-purpose processor, a digital signal processor (DSP), an application specific integrated circuit (ASIC), a field programmable gate array (FPGA) or other programmable logic devices, a discrete gate or transistor logic device, and a discrete hardware component. The general-purpose processor may be a microprocessor or any conventional processor. In addition, the processor 62 may be implemented by the integrated circuit chip.

In the above method, through expanding the threshold period that is used to detect whether the speech input has completely stopped to the multiple detection periods in series while ensuring that each of the multiple detection periods is not greater than the threshold period, a single-stage detection that adopts the threshold period to determine whether the speech input has completely stopped is transformed into a multi-stage detection that adopts the multiple detection periods to determine whether the speech input has completely stopped, and the speech processing result is obtained for the time being after a first detection stage. In this way, when a mid-stage detection is not blank, the detection is re-performed starting from the first stage based on the current progress of the speech collection. When each subsequent detection stage is blank, the speech processing result obtained previously is directly validated and a response may be made without waiting. Therefore, the response speed of the speech interaction may be improved.

Please refer to FIG. 7, FIG. 7 is a structural block view of a computer-readable storage medium 70 according to an embodiment of the present disclosure. The computer-readable storage medium 70 stores a program instruction 71 that is executable by the processor 62. The program instruction 71 is configured to implement the operations in any one of the speech processing method embodiments mentioned above.

In the above method, through expanding the threshold period that is used to detect whether the speech input has completely stopped to the multiple detection periods in series while ensuring that each of the multiple detection periods is not greater than the threshold period, a single-stage detection that adopts the threshold period to determine whether the speech input has completely stopped is transformed into a multi-stage detection that adopts the multiple detection periods to determine whether the speech input has completely stopped, and the speech processing result is obtained for the time being after a first detection stage. In this way, when a mid-stage detection is not blank, the detection is re-performed starting from the first stage based on the current progress of the speech collection. When each subsequent detection stage is blank, the speech processing result obtained previously is directly validated and a response may be made without waiting. Therefore, the response speed of the speech interaction may be improved.

In some embodiments, functions or modules provided by the device in the embodiments of the present disclosure may be used to implement the methods described in the method embodiments mentioned above. A specific implementation may refer to the description of the above method embodiments and will not be repeated for the sake of brevity.

The above description of various embodiments tends to emphasize the differences between the various embodiments, while the similarities thereof may refer to each other and will not be repeated for the sake of brevity.

In the several embodiments of the present disclosure, it should be understood that the disclosed methods and devices may be implemented in other ways. For example, the device implementation described above is only illustrative. For example, the division of modules or units is only a logical function division. In an actual implementation, there may be other division methods, for example, multiple units or components may be combined or integrated into another system, or some features may be ignored or not implemented. On the other hand, the coupling, direct coupling, or communication connection between each other as illustrated or discussed above may be performed through some interfaces. The indirect coupling or communication connection between the devices or units may be in an electrical form, a mechanical form, or other forms.

The unit described as a separate component may or may not be physically separate. A component illustrated as a unit may or may not be a physical unit. That is, the components may be located in one place or may be distributed to multiple network units. Some or all of the units may be selected according to actual needs to achieve the purpose of the embodiment.

In addition, each functional unit in each embodiment of the present disclosure may be integrated into one processing unit, or each unit may exist physically alone, or two or more units may be integrated into one unit. The above integrated unit may be implemented in a form of hardware or software functional unit.

In some embodiments, the integrated unit mentioned in some embodiments of the present disclosure may be stored in the computer-readable storage medium, in case of the integrated unit is implemented in the form of the software function module and is sold or used as a stand-alone product. In other words, the technical solutions of the embodiments of the present disclosure may essentially be or a part of the embodiments of the present disclosure that contributes to solve the technical problems in the related art may be realized in the form of the software product. The computer software product is stored in the storage medium that includes a plurality of instructions. The plurality of instructions may be executed to cause a computer device (may be a personal computer, a server, or a network device, etc.) or a processor to perform all or a part of the operations in the method embodiments of the present disclosure. The aforementioned storage medium includes a USB flash disk, a removable storage device, a read-only memory (ROM), a random access memory (RAM), a disk or a compact disk, and other mediums that are able to store program code.

When the technical solution provided by the present disclosure involves personal information, any product applying the disclosed technical solution shall clearly inform individuals of the rules for handling personal information and obtain their consent before processing such information. When the disclosed technical solution involves sensitive personal information, the product shall obtain the individual's consent before processing the sensitive personal information and meet the requirement for "explicit consent". For example, a clear and prominent sign needs to be placed at a personal information collection device, such as, a camera, to inform individuals that they are entering an area where personal information will be collected. When an individual voluntarily enters such area, it is considered as a consent to the collection of their personal information. Alternatively, the consent may be obtained through a pop-up message or by asking individuals to upload their personal information themselves, provided that the rules for processing personal information are clearly communicated, such as details on the personal information processor, the purpose of processing, the processing method, and the types of personal information being processed.

## Claims

1. A speech processing method, comprising:
S1: obtaining a speech duration of a blank speech that lasts to a current moment and determining whether the speech duration is equal to or greater than a first detection period during a speech collection process, wherein a threshold period for detecting whether a speech input has stopped is expanded to multiple detection periods in series and each of the multiple detection periods is equal to or less than the threshold period;
S2: in response to the speech duration being equal to or greater than the first detection period, obtaining a speech processing result based on a valid speech collected up to the current moment and determining a reference moment based on an endpoint moment of the blank speech;
S3: taking one of the multiple detection periods that is immediately after a latest used one of the multiple detection periods as a reference period and determining whether a reference speech that is continuously collected for the reference period from the reference moment is blank;
S4.1: in response to the reference speech being not blank, discarding the speech processing result and re-executing the operations S1 to S3 based on the current progress of speech collection;
S4.3: in response to the reference speech being blank and all of the multiple detection periods being used, validating a latest obtained speech processing result;
**characterized in that** the method further comprises:
S4.2: in response to the reference speech being blank and at least one of the multiple detection periods remaining unused, updating the reference moment based on an endpoint moment of a latest collected reference speech and re-executing the operation S3; and
after the validating a latest obtained speech processing result, the method further comprises:
calculating an average pause duration of a speaker speaking during the speech collection process; and
adjusting the multiple detection periods expanded from the threshold period based on the average pause duration;
wherein in a case where the sum of the multiple detection periods in series is equal to the threshold period, the adjusting the multiple detection periods expanded from the threshold period based on the average pause duration, comprises:
in response to the average pause duration being not less than a sum of the first i of the multiple detection periods, lengthening at least one of the multiple detection periods from the second one to the i-th one and shortening at least one of the multiple detection periods that is not the first detection period and has not been lengthened, enabling the sum of the multiple detection periods to remain equal to the threshold period;
wherein in a case where the maximum one of the multiple detection periods is equal to the threshold period, the adjusting the multiple detection periods expanded from the threshold period based on the average pause duration, comprises:
in response to the average pause duration being not less than a j-th one of the multiple detection periods, lengthening at least one of the multiple detection periods from the second one to the j-th one, wherein the threshold period is ensured to remain equal to the maximum one of the multiple detection periods after the lengthening and the multiple detection periods are sorted from smallest to largest.

2. The method as claimed in claim 1, wherein a sum of the multiple detection periods in series is equal to the threshold period; or
a maximum one of the multiple detection periods in series is equal to the threshold period, and the multiple detection periods are different from each other and are sorted from smallest to largest.

3. The method as claimed in claim 1 or 2, wherein in response to the sum of the multiple detection periods in series being equal to the threshold period, the endpoint moment is an end moment; or
in response to the maximum one of the multiple detection periods in series being equal to the threshold period, the endpoint moment is a starting moment.

4. The method as claimed in claim 3, wherein in response to the sum of the multiple detection periods in series being equal to the threshold period, the determining a reference moment based on an endpoint moment of the blank speech, comprises:
determining an end moment of the blank speech to be the reference moment; and
the updating the reference moment based on an endpoint moment of a latest collected reference speech, comprises:
taking an end moment of the latest collected reference speech as an updated reference moment.

5. The method as claimed in claim 3, wherein in response to the maximum one of the multiple detection periods in series being equal to the threshold period, the determining a reference moment based on an endpoint moment of the blank speech, comprises:
determining a starting moment of the blank speech to be the reference moment; and
the updating the reference moment based on an endpoint moment of a latest collected reference speech, comprises:
taking a starting moment of the latest collected reference speech as an updated reference moment.

6. The method as claimed in claim 1, further comprising:
in response to the speech duration being less than the first detection period, re-executing the operation S1 and subsequent operations based on the current progress of speech collection.

7. The method as claimed in claim 1, wherein after the validating a latest obtained speech processing result, the method further comprises:
in response to the latest obtained speech processing result fulfilling a preset condition, performing an interaction with a speaker based on the latest obtained speech processing result; or
in response to the latest obtained speech processing result not fulfilling a preset condition, refusing to perform an interaction with a speaker.

8. The method as claimed in claim 7, wherein the speech processing result comprises a recognized text; the performing an interaction with a speaker based on the latest obtained speech processing result, comprises: displaying the recognized text to the speaker; or
wherein the speech processing result comprises a speech intention; the performing an interaction with a speaker based on the latest obtained speech processing result, comprises: responding to the speaker based on the speech intention; or
wherein the speech processing result comprises a recognized text and a speech intention; the performing an interaction with a speaker based on the latest obtained speech processing result, comprises: displaying the recognized text to the speaker and responding to the speaker based on the speech intention.

9. The method as claimed in claim 7, wherein after the in response to the latest obtained speech processing result fulfilling a preset condition, performing an interaction with a speaker based on the latest obtained speech processing result, the method further comprises:
obtaining evaluation information provided by the speaker regarding response speed of the interaction; and
adjusting the multiple detection periods expanded from the threshold period based on the evaluation information.

10. The method as claimed in claim 9, wherein the adjusting the multiple detection periods expanded from the threshold period based on the evaluation information, comprises:
in response to the evaluation information indicating that the response speed is faster than expected, lengthening the first detection period;
in response to the evaluation information indicating that the response speed is slower than expected, shortening the first detection period.

11. The method as claimed in claim 1, wherein before the determining whether the speech duration is not less than a first detection period, the method further comprises:
in response to a registered account being logged in to a local device, obtaining configuration information that is synchronized by the registered account after the registered account is logged in to another device and loading the configuration information to the local device, wherein the configuration information comprises the multiple detection periods in series that are expanded from the threshold period.

12. An electronic device (60) comprising a memory (61) and a processor (62) that are coupled to each other, wherein the memory (61) stores a program instruction and the processor (62) is configured to execute the program instruction to implement any one of the methods as claimed in claims 1-11.

13. A computer-readable storage medium (70) storing a program instruction (71) that is executable by a processor and is configured to implement any one of the methods as claimed in claims 1-11.

## Patentansprüche

1. Ein Sprachverarbeitungsverfahren, umfassend:
S1: Ermitteln einer Sprachdauer einer Leersprache, die bis zu einem aktuellen Zeitpunkt anhält, und Bestimmen, ob die Sprachdauer gleich oder größer als eine erste Detektionsdauer während eines Sprachaufzeichnungsprozesses ist, wobei eine Schwellwertdauer zur Erkennung, ob eine Spracheingabe gestoppt wurde, auf mehrere in Serie angeordnete Detektionsdauern erweitert wird und jede der mehreren Detektionsdauern gleich oder kleiner als die Schwellwertdauer ist.
S2: Als Reaktion darauf, dass die Sprachdauer gleich oder größer als die erste Detektionsdauer ist, Ermitteln eines Ergebnisses der Sprachverarbeitung basierend auf der bis zum aktuellen Zeitpunkt gesammelten gültigen Sprache und Bestimmen eines Referenzzeitpunkts basierend auf einem Endzeitpunkt der Leersprache.
S3: Nehmen eines der mehreren Detektionsperioden, das unmittelbar auf die zuletzt verwendete der mehreren Detektionsperioden folgt, als Referenzperiode und Bestimmen, ob eine Referenzsprache, die kontinuierlich für die Referenzperiode ab dem Referenzzeitpunkt gesammelt wird, eine Leersprache ist.
S4.1: Als Reaktion darauf, dass die Referenzsprache keine Leersprache ist, Verwerfen des Ergebnisses der Sprachverarbeitung und erneutes Ausführen der Operationen S1 bis S3 basierend auf dem aktuellen Fortschritt der Sprachsammlung.
S4.3: Als Reaktion darauf, dass die Referenzsprache eine Leersprache ist und alle der mehreren Detektionsperioden verwendet wurden, Validieren des zuletzt erhaltenen Ergebnisses der Sprachverarbeitung;
**dadurch gekennzeichnet, dass** das Verfahren ferner umfasst:
Als Reaktion darauf, dass die Referenzsprache eine Leersprache ist und mindestens eine der mehreren Detektionsperioden noch nicht verwendet wurde, Aktualisieren des Referenzzeitpunkts basierend auf einem Endzeitpunkt der zuletzt gesammelten Referenzsprache und erneutes Ausführen der Operation S3; und
Nach dem Validieren des zuletzt erhaltenen Ergebnisses der Sprachverarbeitung umfasst das Verfahren ferner: Berechnen einer durchschnittlichen Pausendauer eines Sprechers während des Sprachaufzeichnungsprozesses; und
Anpassen der aus der Schwellwertdauer erweiterten mehreren Detektionsperioden basierend auf der durchschnittlichen Pausendauer;
Wobei im Fall, dass die Summe der in Serie angeordneten mehreren Detektionsperioden gleich der Schwellwertdauer ist, das Anpassen der aus der Schwellwertdauer erweiterten mehreren Detektionsperioden basierend auf der durchschnittlichen Pausendauer Folgendes umfasst:
Als Reaktion darauf, dass die durchschnittliche Pausendauer nicht kleiner als die Summe der ersten i der mehreren Detektionsperioden ist, Verlängern von mindestens einer der mehreren Detektionsperioden von der zweiten bis zur i-ten und Verkürzen von mindestens einer der mehreren Detektionsperioden, die nicht die erste Detektionsperiode ist und nicht verlängert wurde, sodass die Summe der mehreren Detektionsperioden gleich der Schwellwertdauer bleibt;
Wobei im Fall, dass die größte der mehreren Detektionsperioden gleich der Schwellwertdauer ist, das Anpassen der aus der Schwellwertdauer erweiterten mehreren Detektionsperioden basierend auf der durchschnittlichen Pausendauer Folgendes umfasst:
Als Reaktion darauf, dass die durchschnittliche Pausendauer nicht kleiner als die j-te der mehreren Detektionsperioden ist, Verlängern von mindestens einer der mehreren Detektionsperioden von der zweiten bis zur j-ten, wobei sichergestellt wird, dass die Schwellwertdauer nach der Verlängerung gleich der größten der mehreren Detektionsperioden bleibt und die mehreren Detektionsperioden von klein nach groß sortiert werden.

2. Das Verfahren nach Anspruch 1, wobei die Summe der in Serie angeordneten mehreren Detektionsperioden gleich der Schwellwertdauer ist; oder
die größte der in Serie angeordneten mehreren Detektionsperioden gleich der Schwellwertdauer ist, und die mehreren Detektionsperioden voneinander verschieden und von klein nach groß sortiert sind.

3. Das Verfahren nach Anspruch 1 oder 2, wobei als Reaktion darauf, dass die Summe der in Serie angeordneten mehreren Detektionsperioden gleich der Schwellwertdauer ist, der Endzeitpunkt ein Endzeitpunkt ist; oder
als Reaktion darauf, dass die größte der in Serie angeordneten mehreren Detektionsperioden gleich der Schwellwertdauer ist, der Endzeitpunkt ein Anfangszeitpunkt ist.

4. Das Verfahren nach Anspruch 3, wobei als Reaktion darauf, dass die Summe der in Serie angeordneten mehreren Detektionsperioden gleich der Schwellwertdauer ist, das Bestimmen eines Referenzzeitpunkts basierend auf einem Endzeitpunkt der Leersprache Folgendes umfasst:
Bestimmen eines Endzeitpunkts der Leersprache als Referenzzeitpunkt; und
das Aktualisieren des Referenzzeitpunkts basierend auf einem Endzeitpunkt der zuletzt gesammelten Referenzsprache umfasst:
Nehmen eines Endzeitpunkts der zuletzt gesammelten Referenzsprache als aktualisierten Referenzzeitpunkt.

5. Das Verfahren nach Anspruch 3, wobei als Reaktion darauf, dass die größte der in Serie angeordneten mehreren Detektionsperioden gleich der Schwellwertdauer ist, das Bestimmen eines Referenzzeitpunkts basierend auf einem Endzeitpunkt der Leersprache Folgendes umfasst:
Bestimmen eines Anfangszeitpunkts der Leersprache als Referenzzeitpunkt; und
das Aktualisieren des Referenzzeitpunkts basierend auf einem Endzeitpunkt der zuletzt gesammelten Referenzsprache umfasst:
Nehmen eines Anfangszeitpunkts der zuletzt gesammelten Referenzsprache als aktualisierten Referenzzeitpunkt.

6. Das Verfahren nach Anspruch 1, ferner umfassend:
Wobei als Reaktion darauf, dass die Sprachdauer kleiner als die erste Detektionsdauer ist, erneutes Ausführen der Operation S1 und der nachfolgenden Operationen basierend auf dem aktuellen Fortschritt der Sprachsammlung.

7. Das Verfahren nach Anspruch 1, wobei nach dem Validieren des zuletzt erhaltenen Ergebnisses der Sprachverarbeitung das Verfahren ferner umfasst:
Als Reaktion darauf, dass das zuletzt erhaltene Ergebnis der Sprachverarbeitung eine voreingestellte Bedingung erfüllt, Durchführen einer Interaktion mit einem Sprecher basierend auf dem zuletzt erhaltenen Ergebnis der Sprachverarbeitung; oder
Als Reaktion darauf, dass das zuletzt erhaltene Ergebnis der Sprachverarbeitung eine voreingestellte Bedingung nicht erfüllt, Verweigern der Durchführung einer Interaktion mit einem Sprecher.

8. Das Verfahren nach Anspruch 7, wobei das Ergebnis der Sprachverarbeitung einen erkannten Text umfasst; das Durchführen einer Interaktion mit einem Sprecher basierend auf dem zuletzt erhaltenen Ergebnis der Sprachverarbeitung umfasst:
Anzeigen des erkannten Texts für den Sprecher; oder
wobei das Ergebnis der Sprachverarbeitung eine Sprachabsicht umfasst; das Durchführen einer Interaktion mit einem Sprecher basierend auf dem zuletzt erhaltenen Ergebnis der Sprachverarbeitung umfasst: Reagieren auf den Sprecher basierend auf der Sprachabsicht; oder
wobei das Ergebnis der Sprachverarbeitung einen erkannten Text und eine Sprachabsicht umfasst; das Durchführen einer Interaktion mit einem Sprecher basierend auf dem zuletzt erhaltenen Ergebnis der Sprachverarbeitung umfasst: Anzeigen des erkannten Texts für den Sprecher und Reagieren auf den Sprecher basierend auf der Sprachabsicht.

9. Das Verfahren nach Anspruch 7, wobei nach dem Als-Reaktion-darauf-Durchführen einer Interaktion mit einem Sprecher basierend auf dem zuletzt erhaltenen Ergebnis der Sprachverarbeitung, nachdem das zuletzt erhaltene Ergebnis der Sprachverarbeitung eine voreingestellte Bedingung erfüllt, das Verfahren ferner umfasst:
Erhalten von Bewertungsinformationen, die vom Sprecher bezüglich der Antwortgeschwindigkeit der Interaktion bereitgestellt werden; und
Anpassen der aus der Schwellwertdauer erweiterten mehreren Detektionsperioden basierend auf den Bewertungsinformationen.

10. Das Verfahren nach Anspruch 9, wobei das Anpassen der aus der Schwellwertdauer erweiterten mehreren Detektionsperioden basierend auf den Bewertungsinformationen Folgendes umfasst:
Als Reaktion darauf, dass die Bewertungsinformationen anzeigen, dass die Antwortgeschwindigkeit schneller als erwartet ist, Verlängern der ersten Detektionsperiode;
Als Reaktion darauf, dass die Bewertungsinformationen anzeigen, dass die Antwortgeschwindigkeit langsamer als erwartet ist, Verkürzen der ersten Detektionsperiode.

11. Das Verfahren nach Anspruch 1, wobei vor dem Bestimmen, ob die Sprachdauer nicht kleiner als eine erste Detektionsperiode ist, das Verfahren ferner umfasst:
Als Reaktion darauf, dass ein registriertes Konto auf einem lokalen Gerät angemeldet ist, Erhalten von Konfigurationsinformationen, die vom registrierten Konto nach der Anmeldung an einem anderen Gerät synchronisiert werden, und Laden der Konfigurationsinformationen auf das lokale Gerät, wobei die Konfigurationsinformationen die in Serie erweiterten mehreren Detektionsperioden aus der Schwellwertdauer umfassen.

12. Ein elektronisches Gerät (60), umfassend einen Speicher (61) und einen Prozessor (62), die miteinander gekoppelt sind, wobei der Speicher (61) eine Programmanweisung speichert und der Prozessor (62) konfiguriert ist, die Programmanweisung auszuführen, um eine beliebige der in den Ansprüchen 1 bis 11 beanspruchten Methoden zu implementieren.

13. Ein computerlesbares Speichermedium (70), das eine Programmanweisung (71) speichert, die von einem Prozessor ausführbar ist und konfiguriert ist, eine beliebige der in den Ansprüchen 1 bis 11 beanspruchten Methoden zu implementieren.

## Revendications

1. Un procédé de traitement de la parole, comprenant :
S1 : obtenir une durée de parole d'un silence vocal s'étendant jusqu'au moment actuel et déterminer si la durée de parole est égale ou supérieure à une première période de détection au cours d'un processus de collecte de la parole, dans lequel une période seuil servant à détecter si une entrée vocale s'est arrêtée est étendue à plusieurs périodes de détection en série et chacune desdites périodes de détection multiples est égale ou inférieure à la période seuil.
S2 : en réponse au fait que la durée de parole est égale ou supérieure à la première période de détection, obtenir un résultat de traitement de la parole basé sur une parole valide collectée jusqu'au moment actuel et déterminer un moment de référence à partir d'un moment final du silence vocal ;
S3 : prendre l'une desdites périodes de détection multiples qui suit immédiatement la dernière période de détection utilisée comme période de référence et déterminer si une parole de référence, continuellement collectée pendant la période de référence à partir du moment de référence, est un silence.
S4.1 : en réponse au fait que la parole de référence n'est pas un silence, rejeter le résultat de traitement de la parole et réexécuter les opérations S1 à S3 sur la base de l'état actuel de la collecte de la parole ;
S4.3 : en réponse au fait que la parole de référence est un silence et que toutes les périodes de détection multiples ont été utilisées, valider le dernier résultat de traitement de la parole obtenu ;
**caractérisé en ce que** le procédé comprend en outre :
S4.2 : en réponse au fait que la parole de référence est un silence et qu'au moins l'une des périodes de détection multiples reste inutilisée, mettre à jour le moment de référence sur la base d'un moment final de la dernière parole de référence collectée et réexécuter l'opération S3 ; et
après la validation du dernier résultat de traitement de la parole obtenu, le procédé comprend en outre :
calculer une durée moyenne de pause du locuteur pendant le processus de collecte de la parole ; et
ajuster les périodes de détection multiples étendues à partir de la période seuil sur la base de la durée moyenne de pause.
dans lequel, dans le cas où la somme desdites périodes de détection multiples en série est égale à la période seuil, l'ajustement des périodes de détection multiples étendues à partir de la période seuil sur la base de la durée moyenne de pause comprend :
en réponse au fait que la durée moyenne de pause est supérieure ou égale à la somme des premières i périodes des périodes de détection multiples, allonger au moins l'une desdites périodes de détection multiples allant de la deuxième à la i-ème et raccourcir au moins l'une desdites périodes de détection multiples qui n'est pas la première période de détection et qui n'a pas été allongée, permettant à la somme desdites périodes de détection multiples de rester égale à la période seuil ;
dans lequel, dans le cas où la plus grande desdites périodes de détection multiples est égale à la période seuil, l'ajustement des périodes de détection multiples étendues à partir de la période seuil sur la base de la durée moyenne de pause comprend :
en réponse au fait que la durée moyenne de pause est supérieure ou égale à la j-ème période desdites périodes de détection multiples, allonger au moins l'une desdites périodes de détection multiples allant de la deuxième à la j-ème, dans lequel il est assuré que la période seuil reste égale à la plus grande desdites périodes de détection multiples après l'allongement et que lesdites périodes de détection multiples sont triées de la plus petite à la plus grande.

2. Le procédé selon la revendication 1, dans lequel la somme desdites périodes de détection multiples en série est égale à la période seuil ; ou
la plus grande desdites périodes de détection multiples en série est égale à la période seuil, et lesdites périodes de détection multiples sont différentes les unes des autres et triées de la plus petite à la plus grande.

3. The method as claimed in claim 1 or 2, wherein in response to the sum of the multiple detection periods in series being equal to the threshold period, the endpoint moment is an end moment; or
in response to the maximum one of the multiple detection periods in series being equal to the threshold period, the endpoint moment is a starting moment.

4. Le procédé selon la revendication 3, dans lequel, en réponse au fait que la somme desdites périodes de détection multiples en série est égale à la période seuil, la détermination d'un moment de référence sur la base d'un moment final du silence vocal comprend :
déterminer un moment de fin du silence vocal comme moment de référence ;
et la mise à jour du moment de référence sur la base d'un moment final de la dernière parole de référence collectée comprend :
prendre un moment de fin de la dernière parole de référence collectée comme moment de référence mis à jour.

5. Le procédé selon la revendication 3, dans lequel, en réponse au fait que la plus grande desdites périodes de détection multiples en série est égale à la période seuil, la détermination d'un moment de référence sur la base d'un moment final du silence vocal comprend :
déterminer un moment de début du silence vocal comme moment de référence ;
et la mise à jour du moment de référence sur la base d'un moment final de la dernière parole de référence collectée comprend :
prendre un moment de début de la dernière parole de référence collectée comme moment de référence mis à jour.

6. Le procédé selon la revendication 1, comprenant en outre :
en réponse au fait que la durée de parole est inférieure à la première période de détection, réexécuter l'opération S1 et les opérations suivantes sur la base de l'état actuel de la collecte de la parole.

7. Le procédé selon la revendication 1, dans lequel, après la validation du dernier résultat de traitement de la parole obtenu, le procédé comprend en outre :
en réponse au fait que le dernier résultat de traitement de la parole obtenu satisfait à une condition prédéfinie, effectuer une interaction avec un locuteur sur la base du dernier résultat de traitement de la parole obtenu ; ou
en réponse au fait que le dernier résultat de traitement de la parole obtenu ne satisfait pas à une condition prédéfinie, refuser d'effectuer une interaction avec un locuteur.

8. Le procédé selon la revendication 7, dans lequel le résultat de traitement de la parole comprend un texte reconnu, l'exécution d'une interaction avec un locuteur sur la base du dernier résultat de traitement de la parole obtenu comprenant : afficher le texte reconnu au locuteur ; ou
dans lequel le résultat de traitement de la parole comprend une intention vocale, l'exécution d'une interaction avec un locuteur sur la base du dernier résultat de traitement de la parole obtenu comprenant : répondre au locuteur sur la base de l'intention vocale ; ou
dans lequel le résultat de traitement de la parole comprend un texte reconnu et une intention vocale, l'exécution d'une interaction avec un locuteur sur la base du dernier résultat de traitement de la parole obtenu comprenant : afficher le texte reconnu au locuteur et répondre au locuteur sur la base de l'intention vocale.

9. Le procédé selon la revendication 7, dans lequel, après l'exécution, en réponse au fait que le dernier résultat de traitement de la parole obtenu satisfait à une condition prédéfinie, d'une interaction avec un locuteur sur la base du dernier résultat de traitement de la parole obtenu, le procédé comprend en outre :
obtenir des informations d'évaluation fournies par le locuteur concernant la vitesse de réponse de l'interaction ; et
ajuster les périodes de détection multiples étendues à partir de la période seuil sur la base desdites informations d'évaluation.

10. Le procédé selon la revendication 9, dans lequel l'ajustement des périodes de détection multiples étendues à partir de la période seuil sur la base des informations d'évaluation comprend :
en réponse au fait que les informations d'évaluation indiquent que la vitesse de réponse est plus rapide que prévu, allonger la première période de détection ;
en réponse au fait que les informations d'évaluation indiquent que la vitesse de réponse est plus lente que prévu, raccourcir la première période de détection.

11. Le procédé selon la revendication 1, dans lequel, avant la détermination du fait que la durée de parole est supérieure ou égale à une première période de détection, le procédé comprend en outre :
en réponse au fait qu'un compte enregistré est connecté à un dispositif local, obtenir des informations de configuration synchronisées par le compte enregistré après que le compte enregistré s'est connecté à un autre dispositif et charger lesdites informations de configuration dans le dispositif local, dans lequel les informations de configuration comprennent les périodes de détection multiples en série qui sont étendues à partir de la période seuil.

12. Un dispositif électronique (60) comprenant une mémoire (61) et un processeur (62) couplés l'un à l'autre, dans lequel la mémoire (61) stocke une instruction de programme et le processeur (62) est configuré pour exécuter ladite instruction de programme afin de mettre en œuvre l'un quelconque des procédés selon les revendications 1 à 11.

13. A computer-readable storage medium (70) storing a program instruction (71) that is executable by a processor and is configured to implement any one of the methods as claimed in claims 1-11.
